# EUROPÄISCHE PATENTSCHRIFT

(11) **EP 0 580 822 B1**
(45) Veröffentlichungstag und Bekanntmachung des Hinweises auf die Patenterteilung: **13.09.1995**
(21) Anmeldenummer: 92924620.5
(22) Anmeldetag: 28.11.1992
(51) Int. Cl.: B60S 1/34

(54) **WISCHARM, INSBESONDERE ZUR REINIGUNG VON SCHEIBEN VON KRAFTFAHRZEUGEN**
WIPER ARM, ESPECIALLY FOR CLEANING MOTOR VEHICLE WINDOW PANES
BRAS D'ESSUIE-GLACE PARTICULIEREMENT DESTINE NOTAMMENT AU NETTOYAGE DES VITRES DE VEHICULES AUTOMOBILES

(30) Priorität: 12.12.1991 DE 4140960
(43) Veröffentlichungstag der Anmeldung: 02.02.1994
(73) Patentinhaber: ITT Automotive Europe GmbH, 60488 Frankfurt am Main (DE)
(72) Erfinder: EGNER-WALTER, Bruno, D-74075 Heilbronn (DE)
(86) Internationale Anmeldenummer: EP9202758
(87) Internationale Veröffentlichungsnummer: WO9311977

(56) Entgegenhaltungen:
- DE-A- 3 926 714
- FR-A- 1 011 618
- US-A- 4 932 097

## Beschreibung

Die Erfindung geht aus von einem Wischarm, der insbesondere zur Reinigung von Scheiben von Kraftfahrzeugen verwendet wird und der ein vorzugsweise ganz aus einem Blech gefertigtes Befestigungsteil aufweist, das drehfest auf einer Wischerwelle montierbar ist und eine Aufnahme zur Lagerung eines Gelenkteils besitzt (Wischarm nach der Gattung nach DE-A-3 428 795 oder DE-A-3 926 714).

Die heute üblicherweise verwendeten Wischarme an Kraftfahrzeugen weisen als wesentliche Bestandteile ein Befestigungsteil, mit dem sie drehfest auf einer Wischerwelle sitzen und das als Druckgußteil aus Zink oder Aluminium hergestellt ist, ein aus einem Blech ausgestanztes und in eine U-Form gebrachtes Gelenkteil, eine Wischstange, die fest mit dem Gelenkteil verbunden ist und zusammen mit diesem am Befestigungsteil angelenkt ist und gegenüber diesem verschwenkt werden kann, und eine Anpreßdruckfeder auf, die im Befestigungsteil einerseits und am Gelenkteil oder an der Wischstange andererseits eingehängt ist. Ein solcher Wischarm ist z. B. aus der EP-A-0 301 131 bekannt. Ein Befestigungsteil aus Druckguß ist allein schon vom Herstellungsverfahren und vom verwendeten Material her ein teures Bestandteil des Wischarms. Dies gilt insbesondere auch deshalb, weil bei neuartigen Kraftfahrzeugen in zunehmendem Maße die Wischerwelle in einem Schlitz zwischen der Windschutzscheibe und der Karosserie angeordnet ist und deshalb sehr lange Befestigungsteile verwendet werden. Da die Befestigungsteile in der Regel wenigstens zum Teil auch sichtbar sind, werden an die Oberfläche hohe Qualitätsanforderungen gestellt, die mit Druckgußteilen nur schwer zu erfüllen sind. Dies führt zu einer weiteren Verteuerung der Befestigungsteile.

Um Wischarme der gewünschten Qualität kostengünstiger herstellen zu können, hat man schon vorgeschlagen, auch das Befestigungsteil als Stanz-Biegeteil aus einem Blech herzustellen. Ein Wischarm mit einem solchen Befestigungsteil ist z. B. aus der DE-A-34 28 795 oder der DE-A-39 26 714 bekannt. Die Befestigungsteile dieser Wischarme besitzen einen Rücken, der wenigstens abschnittsweise in einer zur Wischerwelle senkrechten Ebene liegt, und zwei Seitenwangen, die senkrecht vom Rücken abgebogen sind und zur zu reinigenden Scheibe zeigen oder von dieser wegweisen. In den beiden Seitenwangen sind koaxial zueinander angeordnete Bohrungen vorgesehen, die eventuell unter Mithilfe einer eingepreßten Lagerbuchse einen Gelenkbolzen zur schwenkbaren Lagerung des Gelenkteils am Befestigungsteii aufnehmen. Die Öffnungen in den Seitenwangen müssen bereits beim Ausstanzen des Blechs gebildet werden. Erst danach wird das Blech zum Befestigungsteil gebogen und gezogen, so daß eine genaue koaxiale Anordnung der Öffnungen nicht gewährleistet ist. Die bekannten Konstruktionen bringen es außerdem mit sich, daß für ein Befestigungsteil relativ viel Material eingesetzt werden muß.

Der Erfindung liegt die Aufgabe zugrunde, einen Wischarm mit den Merkmalen aus dem Oberbegriff des Anspruchs 1 so weiterzuentwickeln, daß das Befestigungsteil aus Blech mit geringem Materialeinsatz und wenig Aufwand für die Verformung kostengünstig hergestellt werden kann.

Diese Aufgabe wird für einen Wischarm mit den Merkmalen aus dem Oberbegriff des Anspruchs 1 erfindungsgemäß dadurch gelöst, daß die Aufnahme zur Lagerung des Gelenkteils durch Biegen des Bleches parallel zur Achse der Aufnahme gebildet ist. Bei einem erfindungsgemäßen Wischarm sind also keine Seitenwangen des Befestigungsteils mehr notwendig, um die Aufnahme für eine Lagerbuchse und einen Gelenkbolzen zur Lagerung des Gelenkteils am Befestigungsteil zu schaffen. Dadurch wird Material eingespart. Das Problem der koaxialen Anordnung zweier voneinander entfernter Öffnungen entfällt.

Vorteilhafte Ausgestaltungen eines erfindungsgemäßen Wischarms kann man den Unteransprüchen entnehmen.

So wird eine Ausführung bevorzugt, bei der gemäß Anspruch 2 in die Aufnahme eine Lagerbuchse eingepreßt ist.

Besonders einfach erscheint eine Lösung gemäß Anspruch 3, nach dem das Blech zur Bildung einer Aufnahme nach Art eines Scharnierbandes gerollt ist.

Vorteilhaft erscheint jedoch auch eine Ausführung gemäß Anspruch 6, wonach das Befestigungsteil im Bereich der Aufnahme mehrere, in Richtung der Aufnahmeachse hintereinanderliegende Abschnitte aufweist, von denen wenigstens einer in die eine Richtung und wenigstens einer in die entgegengesetzte Richtung gebogen ist. Bei dieser Ausführung ist es nicht notwendig, daß die einzelnen Abschnitte ganz um die Aufnahme herumreichen. Es ist nicht einmal notwendig, daß sie sich in peripherer Richtung der Aufnahme überlappen. Es kann somit gegenüber der Lösung nach Art eines Scharnierbandes Material eingespart werden. Vorzugsweise sind gemäß Anspruch 7 jeweils unmittelbar hintereinanderliegende Abschnitte entgegengesetzt gebogen, so daß eine eingepreßte Lagerbuchse gut abgestützt wird. Besonders zweckmäßig erscheint eine Ausführung, bei der wenigstens drei Abschnitte vorhanden sind, die abwechselnd in entgegengesetzte Richtungen gebogen sind und bei der die beiden äußersten Abschnitte in die gleiche Richtung gebogen sind. Es läßt sich auf diese Weise eine symmetrische Abstützung einer eingepreßten Lagerbuchse erreichen.

Das Befestigungsteil erhält im Bereich der Aufnahme eine besonders große Stabilität, wenn in entgegengesetzte Richtungen gebogene Abschnitte des Blechs gemäß Anspruch 9 beidseits der Aufnahme aneinander angebunden sind.

Einen seitlichen Versatz der Achse der Aufnahme zur Ebene des Blechs erhält man gemäß Anspruch 10 auf einfache Weise dadurch, daß ein der Bildung der Aufnahme dienender gebogener Abschnitt des Befestigungsteils tangential in einen ebenen Abschnitt des Befestigungsteils übergeht. Stimmt die dabei erzielbare Richtung des Versatzes nicht mit der gewünschten Richtung überein, so ist es möglich, den gewünschten Versatz gemäß Anspruch 11 dadurch zu erhalten, daß das Befestigungsteil in einen der Bildung der Aufnahme dienenden in eine bestimmte Richtung gebogenen Abschnitt in einer zu dessen Biegung entgegengesetzten Biegung übergeht.

Zum Einhängen der Anpreßdruckfeder besitzt das Blech vorteilhafterweise einen Durchbruch, der sich gemäß Anspruch 12 von einer Bohrung zum Aufsetzen auf die Wischerwelle aus betrachtet, vor der Aufnahme im Blech befindet. Um einen großen Abstand zwischen der Achse der Aufnahme und der Wirkungslinie der Anpreßdruckfeder zu erhalten, befindet sich gemäß Anspruch 13 die Abstützstelle der Anpreßdruckfeder im Durchbruch im Bereich der der zu reinigenden Scheibe zugewandten Unterseite des Blechs. Eine Abstützung an dieser Kante erreicht man zweckmäßigerweise dadurch, daß das Blech im Bereich des Durchbruchs zur zu reinigenden Scheibe geneigt ist. Wenn sich die Anpreßdruckfeder an einer Kante des Durchbruchs zur Unterseite des Blechs abstützt, wird die Höhe des Blechs in hohem Maße dazu ausgenutzt, einen großen Abstand zwischen der Achse der Aufnahme und der Wirkungslinie der Feder zu erhalten. Dies bedeutet umgekehrt, daß der Wischarm im Bereich des Gelenks zwischen dem Befestigungsteil und dem Gelenkteil sehr flach gebaut werden kann.

Wischarme für Kraftfahrzeuge besitzen normalerweise im Bereich der Aufnahme einen Anschlag für das Gelenkteil, damit das Befestigungsteil und das Gelenkteil vor der Montage des Wischarms am Kraftfahrzeug von der Anpreßdruckfeder nur bis zu einem sehr stumpfen Winkel gegeneinander geknickt werden können. Vorteilhafterweise wird gemäß Anspruch 16 auch bei einem erfindungsgemäßen Wischarm ein solcher Anschlag gebildet. Gemäß Anspruch 17 wird der Anschlag dabei in einfacher Weise aus einem zur Bildung der Aufnahme gebogenen Abschnitt des Blechs des Befestigungsteils ausgeschnitten. Insbesondere kann der Anschlag durch ein gerades, verlängertes Ende eines zur Bildung der Aufnahme gebogenen Abschnitts des Blechs des Befestigungsteils gebildet werden.

Mehrere Ausführungsbeispiele eines erfindungsgemäßen Wischarms, von denen zum Teil lediglich das jeweilige Befestigungsteil gezeigt ist, sind in den Zeichnungen dargestellt. Anhand der Figuren dieser Zeichnungen wird die Erfindung nun näher erläutert.

Es zeigen:
- Figur 1: einen auf einer Wischerwelle befestigten Wischarm gemäß einer ersten Ausführung, bei der die Aufnahme durch entgegengesetzt gebogene Abschnitte des Befestigungsteils gebildet ist,
- Figur 2: eine Draufsicht auf das bloße Befestigungsteil nach Figur 1,
- Figur 3: eine leicht geänderte Ausführung des Befestigungsteils nach den Figuren 1 und 2 mit einer anderen Ausbildung des Anschlags für das Gelenkteil,
- Figur 4: im Längsschnitt eine Ausführung eines Befestigungsteils, bei der die Aufnahme durch Rollen des Blechs nach Art eines Scharnierbandes gebildet ist,
- Figur 5: eine Draufsicht auf das Befestigungsteil nach Figur 4,
- Figur 6: eine weitere Ausführung eines Befestigungsteils, bei der die Aufnahme durch Rollen des Blechs nach Art eines Scharnierbandes gebildet ist,
- Figur 7: eine Ausführung eines Befestigungsteils, bei der zur Bildung der Aufnahme unterschiedlich gebogene Abschnitte des Blechs beidseits der Aufnahme aneinander angebunden sind,
- Figur 8: eine Draufsicht auf das Befestigungsteil nach Figur 7,
- Figur 9: eine Ausführung, bei der das Befestigungsteil im Bereich eines Durchbruchs zum Einhängen der Anpreßdruckfeder zur Scheibe hin geneigt ist und
- Figur 10: eine vergrößerte Darstellung der Einzelheit X aus Figur 9.

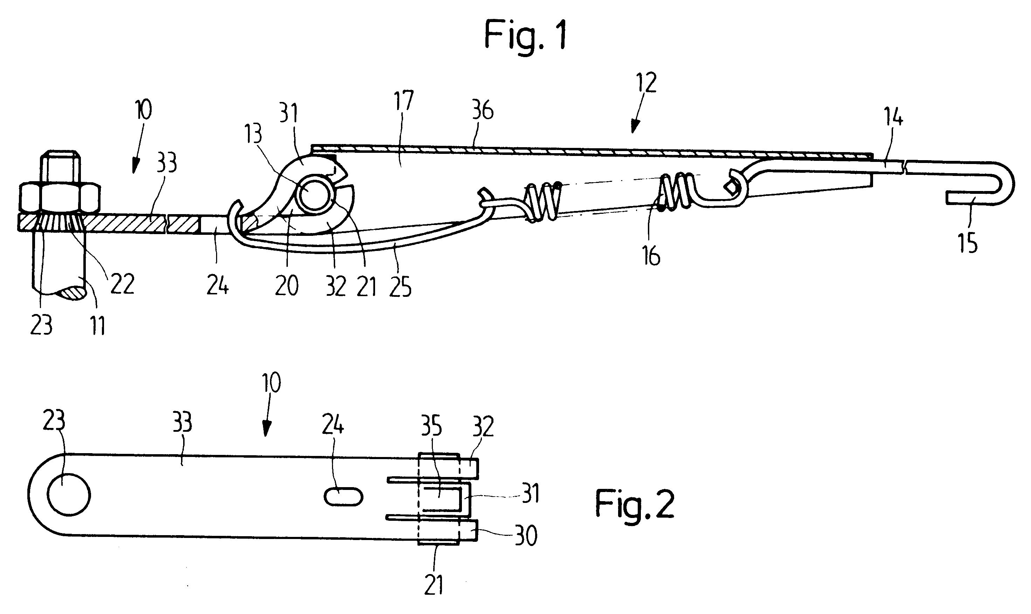

Nach Figur 1 erkennt man als wesentliche Bestandteile eines Wischarms ein Befestigungsteil 10, mit dem der Wischarm auf einer Wischerwelle 11 drehfest befestigt ist, ein aus einem Blech geformtes, U-förmiges Gelenkteil 12, das über einen Bolzen 13 schwenkbar am Befestigungsteil angelenkt ist, eine Wischstange 14, die am freien Ende zu einem Haken 15 gebogen ist und am anderen Ende durch Verkrimpen fest mit dem Gelenkteil 12 verbunden ist, und eine Schraubenfeder 16, die am Befestigungsteil 10 und an der Wischstange 14 eingehängt ist und die im wesentlichen innerhalb des Gelenkteils 12 verläuft. Das Befestigungsteil 10 wird durch ein Blech von länglicher Form gebildet, das sich von der Wischerwelle 11 aus in Längsrichtung des gesamten Wischarms erstreckt. An seinem von der Wischerwelle 11 entfernten Ende hat das Befestigungsteil eine Aufnahme 20, in die eine Lagerbuchse 21 eingepreßt ist, die das Blech des Befestigungsteils axial etwas überragt, so daß die Seitenwangen 17 des Gelenkteils 12 an ihr anliegen können. Vom Gelenkteil 12 aus gesehen hinter der Aufnahme 20 besteht das Befestigungsteil 10 aus unprofiliertem, vollem Material wie Stahl oder Aluminium. Zum Aufsetzen auf einen konischen und gerändelten Abschnitt 22 der Wischerwelle 11 besitzt das Befestigungsteil eine konische Bohrung 23, die beim Stanzen des Blechzuschnitts für das Befestigungsteil vorgestanzt und anschließend gesenkt wird.

Von der Bohrung 23 aus gesehen vor der Aufnahme 20 ist eine Öffnung 24 aus dem das Befestigungsteil bildenden Blech ausgestanzt, in die über einen Bügel 25 die Schraubenfeder 16 eingehängt ist.

Im Bereich der Aufnahme 20 weist das Befestigungsteil 10 drei in Richtung der Achse der Aufnahme 20 hintereinanderliegende Abschnitte 30, 31 und 32 auf. Die beiden äußeren Abschnitte 30 und 32 sind parallel zur Achse der Aufnahme 20 aus der Ebene des Blechs nach oben gebogen, wobei sie tangential in den ebenen Abschnitt 33 des Blechs übergehen. Der mittlere Abschnitt 31 ist entgegengesetzt zu den beiden Abschnitten 30 und 32 um die Aufnahme 20 herumgebogen, wobei er in einer zu seiner Biegung entgegengesetzten Biegung in den ebenen Abschnitt 33 des Befestigungsteils 10 übergeht. Insgesamt ergibt sich dadurch ein Versatz der Achse der Aufnahme 20 aus der Ebene des Abschnitts 33. Die freien Enden der Abschnitte 30 und 32 einerseits und des Abschnitts 31 andererseits überlappen sich nicht, wie man deutlich aus Figur 1 sieht, sondern haben einen geringen Abstand voneinander. Dadurch wird jedoch eine sichere Fixierung der Lagerbuchse 21 nicht beeinträchtigt.

Aus dem mittleren Abschnitt 31 ist ein Anschlag 35 ausgeschnitten, der tangential zur Aufnahme 20 bzw. zum Abschnitt 31 verläuft und der über diesen Abschnitt hochsteht. An ihm kann das Gelenkteil mit seinem Rücken 36 anliegen, so daß durch den Anschlag 35 das Einknicken des Wischarms aufgrund der Kraft der Schraubenfeder 16 begrenzt ist.

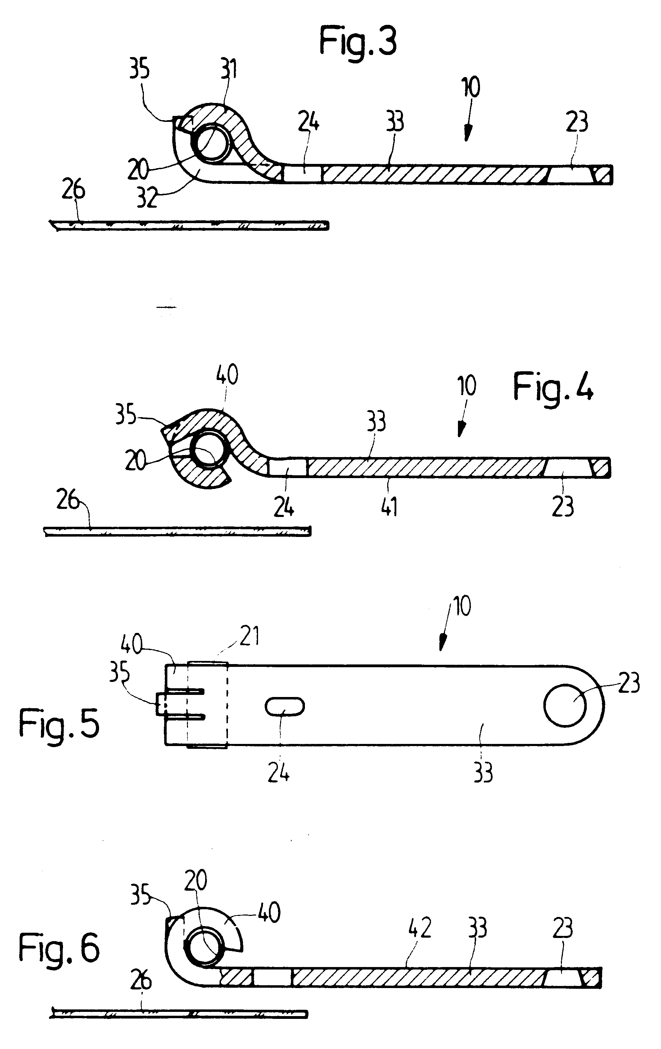

Die Ausführung nach Figur 3 ähnelt derjenigen aus den Figuren 1 und 2 insofern als die Aufnahme 20 wiederum durch Abschnitte 30, 31 und 32 gebildet wird, die gemäß den entsprechenden Abschnitten der Ausführung nach den Figuren 1 und 2 gebogen sind. Ein Unterschied besteht lediglich im Hinblick auf den Anschlag 35 für das Gelenkteil 12. Die Abschnitte 30 und 32 sind länger als bei der Ausführung nach den Figuren 1 und 2 und stehen mit einem geraden Ende senkrecht zur Ebene des Abschnitts 33 nach oben von der zu reinigenden Scheibe 26 weg. Jedes hochstehende Ende stellt einen Anschlag 35 für das Gelenkteil 12 dar. Beide Anschläge 35 wirken parallel.

Bei den beiden Ausführungen nach den Figuren 4, 5 und 6 sind nicht mehrere in Achsrichtung der Aufnahme 20 hintereinanderliegende, in unterschiedliche Richtungen gebogene Abschnitte vorhanden. Zur Bildung der Aufnahme 20 ist vielmehr ein einziger Abschnitt 40 des das Befestigungsteil 10 bildenden Blechs nach Art eines Scharnierbandes gerollt, und zwar ist der Abschnitt 40 bei der Ausführung nach den Figuren 4 und 5 so gerollt, daß sich sein freies Ende an der der zu reinigenden Scheibe 26 zugewandten Unterseite 41 des Befestigungsteils 10 befindet. Damit die Achse der Aufnahme 20 bezüglich des Abschnitts 33 des Befestigungsteils 10 nach oben versetzt ist, also auf der anderen Seite des Abschnitts 33 als die zu reinigende Scheibe 26 liegt, geht der Abschnitt 40 ähnlich wie der Abschnitt Abschnitt 31 der Ausführungen nach den Figuren 1 und 3 in einer seiner Biegung entgegengesetzten Biegung in den ebenen Abschnitt 33 über.

Ähnlich wie aus dem mittleren Abschnitt 31 bei der Ausführung nach den Figuren 1 und 2 ist bei der Ausführung nach den Figuren 4 und 5 aus dem Abschnitt 40 ein Anschlag 35 ausgeschnitten, der tangential vom Abschnitt 40 leicht nach unten geneigt wegweist. Wie der Anschlag 35 bei der Ausführung nach den Figuren 1 und 2 ist auch der Anschlag 35 nach den Figuren 4 und 5 im Bereich des höchsten Punktes des Abschnitts 40 an diesen angebunden.

Bei der Ausführung nach Figur 6 ist der Abschnitt 40 entgegengesetzt zu demjenigen nach den Figuren 4 und 5 gerollt. Das freie Ende des Abschnitts 40 befindet sich also an der der Scheibe 26 gegenüberliegenden Oberseite 42 des Blechabschnitts 33. Der Abschnitt 40 geht tangential in den ebenen Abschnitt 33 über, wobei der Versatz der Achse der Aufnahme 20 aus der Ebene des Abschnitts 33 durch die Rollrichtung des Abschnitts 40 erhalten wird.

Ein Anschlag 35 für das Gelenkteil 12 ist wiederum aus dem Abschnitt 40 ausgeschnitten, steht nun allerdings ähnlich wie die Anschläge 35 der Ausführung nach Figur 3 tangential von dem Abschnitt 40 ausgehend senkrecht nach oben. Angebunden an den Abschnitt 40 ist der Anschlag 35 etwa auf Höhe der Achse der Aufnahme 20.

Bei beiden Ausführungen nach den Figuren 4 und 5 einerseits und Figur 6 andererseits ist der Anschlag 35 entfernt vom freien Ende des Abschnitts 40 an diesen angebunden, so daß wenigstens vor dem Rollen des Blechs sein freies Ende in dieselbe Richtung wie das freie Ende eines Abschnitts 40 zeigt. Es ist jedoch auch möglich den Anschlag 35 so aus den Abschnitten 40 auszuschneiden, daß sein freies Ende in die entgegengesetzte Richtung zeigt. Bei der Ausführung nach den Figuren 4 und 5 würde der Anschlag 35 dann ähnlich wie bei der Ausführung nach Figur 6 hochstehen, bei der Ausführung nach Figur 6 dagegen ähnlich wie bei der Ausführung nach den Figuren 4 und 5 mehr in Längsrichtung des Wischarms abstehen.

Bei den Ausführungen nach den Figuren 4 bis 6 ist es besonders leicht, das freie Ende des gebogenen Abschnitts 40 etwas länger als dargestellt zu machen und mit dem Blechabschnitt 33 z. B. zu verschweißen. Dadurch wird die Aufnahme 20 besonders stabil.

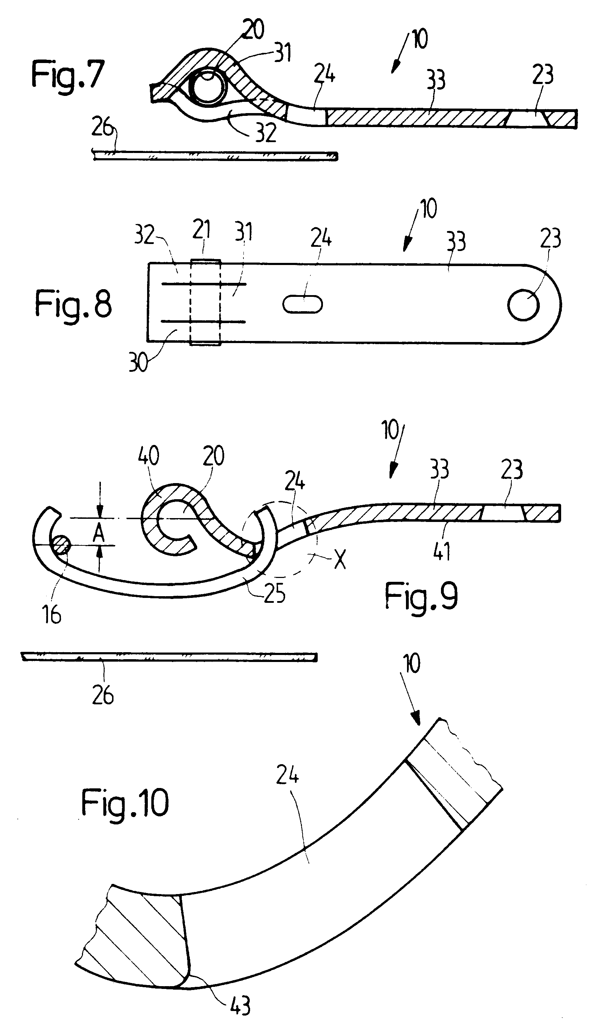

Das Befestigungsteil 10 nach den Figuren 7 und 8 besitzt wiederum einen ebenen Abschnitt 33 mit einer konischen Bohrung 23 und einer Öffnung 24. Die Aufnahme 20 wird ähnlich wie bei den Ausführungen nach den Figuren 1 bis 3 durch drei Abschnitte 30, 31 und 32 gebildet, die in Achsrichtung der Aufnahme 20 hintereinanderliegen. Der mittlere Abschnitt 31 ist wie bei den Ausführungen nach den Figuren 1 bis 3 entgegengesetzt zu den beiden äußeren Abschnitten 30 und 32 gebogen und führt oben um die Aufnahme 20 herum, während die Abschnitte 30 und 32 unten nahe an der Scheibe 26 um die Aufnahme 20 herumführen. Anders als bei den beiden Ausführungen nach den Figuren 1 bis 3 sind nun jedoch die Abschnitte 30, 31 und 32 beidseits der Aufnahme 20 aneinander angebunden, haben also kein freies Ende. Nur im Bereich des Aufnahme 20 sind sie durch Längsschnitte voneinander getrennt, so daß sie entgegengesetzt gebogen werden können.

Ähnlich wie bei der Ausführung nach Figur 1 oder der Ausführung nach Figur 4 läßt sich auch bei der Ausführung nach den Figuren 7 und 8 aus dem mittleren Abschnitt 31 ein Anschlag für das Gelenkteil ausschneiden.

Man erkennt noch aus Figur 7, daß das Blech vor der Aufnahme 20 insgesamt etwas nach oben gebogen ist. Auf diese Weise wird die Achse der Aufnahme 20 stärker aus der Ebene des Abschnitts 33 versetzt, so daß der für die Kraft der Schraubenfeder 16 wirksame Hebelarm größer ist als bei einer Ausführung, bei der die Abschnitte 30 und 32 tangential in den Abschnitt 33 übergehen.

Figur 9 zeigt wiederum ein Befestigungsteil 10 aus Blech mit einer konischen Bohrung 23 und mit einer Öffnung 24 zum Einhängen eines Bügels 25, an dem wiederum eine Schraubenfeder 16 eingehängt ist. Die Aufnahme 20 ist durch Rollen eines Blechabschnitts 40 ähnlich wie bei der Ausführung nach Figuren 4 und 5 gebildet. Allerdings ist das Befestigungsteil im Bereich der Öffnung 24 nach unten, d. h. zur zu reinigenden Scheibe 26 geneigt, so daß der Bügel 25 an der Kante des Durchbruchs 24 anliegt, die dieser mit der Unterseite 41 des Blechs hat. Dies bedeutet, daß der für den wirksamen Hebelarm maßgebende Abstand A zwischen der Achse der Aufnahme 20 und der Wirkungslinie der Feder 16 bei gleicher Bauhöhe des Befestigungsteils maximal wird. Bei der Ausführung nach Figur 9 ist diese Bauhöhe nach wie vor durch den Außendurchmesser des gebogenen Abschnitts 40 bestimmt, da der maximale Abstand des Blechs von dem ebenen Abschnitt 33 im Bereich der Neigung nach unten nicht größer ist als im Bereich des Abschnitts 40.

Die Kante 43, an der der Bügel 25 anliegt, ist, wie aus Figur 10 hervorgeht, durch eine zusätzliche Anprägung abgerundet.

Bei allen Ausführungen und grundsätzlich bei einem erfindungsgemäßen Wischarm kann man das Befestigungsteil 10 mit einer Kunststoffkappe abdecken, die in herkömmlicher Weise auf die vorstehenden Abschnitte der Lagerbuchse 21 aufgerastet ist.

## Patentansprüche

1. Wischarm, insbesondere zur Reinigung von Scheiben von Kraftfahrzeugen, mit einem vorzugsweise ganz aus einem Blech gefertigten Befestigungsteil (10), das drehfest auf einer Wischerwelle (11) montierbar ist und eine Aufnahme (20) zur Lagerung eines Gelenkteils (12) aufweist,
dadurch gekennzeichnet, daß die Aufnahme (20) durch Biegen des Bleches parallel zur Achse der Aufnahme (20) gebildet ist.

2. Wischarm nach Anspruch 1, dadurch gekennzeichnet, daß in die Aufnahme (20) eine Lagerbuchse (21) eingepreßt ist.

3. Wischarm nach Anspruch 1 oder 2, dadurch gekennzeichnet, daß das Blech zur Bildung der Aufnahme (20) nach Art eines Scharnierbandes gerollt ist.

4. Wischarm nach Anspruch 3, dadurch gekennzeichnet, daß das Blech so gerollt ist, daß sich das freie Ende des gerollten Abschnitts (40) an der der zu reinigenden Scheibe (26) abgewandten Oberseite (42) des Befestigungsteils (10) befindet.

5. Wischarm nach Anspruch 3, dadurch gekennzeichnet, daß das Blech so gerollt ist, daß sich das freie Ende des gerollten Abschnitts (40) an der der zu reinigenden Scheibe (26) zugewandten Unterseite (41) des Befestigungsteils (10) befindet.

6. Wischarm nach einem vorhergehenden Anspruch, dadurch gekennzeichnet, daß das Befestigungsteil (10) im Bereich der Aufnahme (20) mehrere, in Richtung der Aufnahmeachse hintereinanderliegende Abschnitte (30, 31, 32) aufweist, von denen wenigstens einer (31) in die eine Richtung und wenigstens einer (30, 32) in entgegengesetzter Richtung gebogen ist.

7. Wischarm nach Anspruch 6, dadurch gekennzeichnet, daß jeweils unmittelbar hintereinanderliegende Abschnitte (30, 31, 32) entgegengesetzt gebogen sind.

8. Wischarm nach Anspruch 6 oder 7, dadurch gekennzeichnet, daß wenigstens drei Abschnitte (30, 31, 32) vorhanden sind und daß die beiden äußersten Abschnitte (30, 32) in die gleiche Richtung gebogen sind.

9. Wischarm nach einem der Ansprüche 6 bis 8, dadurch gekennzeichnet, daß die Abschnitte (30, 31, 32) beidseits der Aufnahme (20) aneinander angebunden sind.

10. Wischarm nach einem vorhergehenden Anspruch, dadurch gekennzeichnet, daß ein der Bildung der Aufnahme (20) dienender gebogener Abschnitt (30, 32, 40) des Befestigungsteils (10) tangential in einen ebenen Abschnitt (33) des Befestigungsteils (10) übergeht.

11. Wischarm nach einem vorhergehenden Anspruch, dadurch gekennzeichnet, daß das Befestigungsteil (10) in einen der Bildung der Aufnahme (20) dienenden, in eine bestimmte Richtung gebogenen Abschnitt (31, 40) in einer zu dessen Biegung entgegengesetzten Biegung übergeht.

12. Wischarm nach einem vorhergehenden Anspruch, dadurch gekennzeichnet, daß das Befestigungsteil (10), von einer Bohrung (23) zum Aufsetzen auf die Wischerwelle (11) aus betrachtet, vor der Aufnahme (20) im Blech einen Durchbruch (24) zum Einhängen einer Anpreßdruckfeder (16) aufweist.

13. Wischarm nach Anspruch 12, dadurch gekennzeichnet, daß sich die Abstützstelle der Anpreßdruckfeder (16) im Durchbruch (24) im Bereich der der zu reinigenden Scheibe (26) zugewandten Unterseite (41) des Blechs befindet.

14. Wischarm nach Anspruch 13, dadurch gekennzeichnet, daß das Blech im Bereich des Durchbruchs (24) zur zu reinigenden Scheibe (26) geneigt ist.

15. Wischarm nach einem der Ansprüche 12 bis 14, dadurch gekennzeichnet, daß jede Kante (43) des Durchbruchs (24), an der sich die Anpreßdruckfeder (16) abstützt, abgerundet ist.

16. Wischarm nach einem vorhergehenden Anspruch, dadurch gekennzeichnet, daß im Bereich der Aufnahme (20) ein Anschlag (35) für die Schwenkbewegung des Gelenkteils (12) gebildet ist.

17. Wischarm nach Anspruch 16, dadurch gekennzeichnet, daß der Anschlag (35) aus einem zur Bildung der Aufnahme (20) gebogenen Abschnitt (31, 40) des Blechs des Befestigungsteils (10) ausgeschnitten ist.

18. Wischarm nach Anspruch 16, dadurch gekennzeichnet, daß der Anschlag (35) durch ein gerades, verlängertes Ende eines zur Bildung der Aufnahme 20 gebogenen Abschnitts (30, 32, 40) des Blechs des Befestigungsteils (10) gebildet wird.

## Claims

1. A wiper arm, especially for cleaning windshields of motor vehicles, with a fixing part (10) preferably in whole made of one sheet metal, which can be non-rotatably assembled on a wiper shaft (11) and which comprises a retainer (20) for mounting a joint piece (12),
characterized in that the retainer (20) is formed by bending the sheet metal in parallel to the axis of the retainer (20).

2. A wiper arm according to claim 1, characterized in that the retainer (20) is pressed into a bearing bushing (21).

3. A wiper arm according to claim 1 or 2, characterized in that the sheet metal is rolled in the way of a strip hinge for forming the retainer (20).

4. A wiper arm according to claim 3, characterized in that the sheet metal is rolled in such a way that the free end of the rolled section (40) is situated at the upper side (42) of the fixing part (10) turned away from the windshield (26) which is to be cleaned.

5. A wiper arm according to claim 3, characterized in that the sheet metal is rolled in such a way that the free end of the rolled section (40) is situated at the bottom side (41) of the fixing part turned towards the windshield (26) which is to be cleaned.

6. A wiper arm according to a preceding claim, characterized in that the fixing part (10) comprises several sections (30, 31, 32) in the area of the retainer (20), which are lying behind each other in the direction of the axis of the retainer, of which sections at least one (31) is bent into the one direction and at least one (30, 32) is bent into the opposite direction.

7. A wiper arm according to claim 6, characterized in that sections (30, 31, 32) lying directly behind each other are bent in opposite directions.

8. A wiper arm according to claim 6 or 7, characterized in that at least three sections (30, 31, 32) are provided and in that the two very outside sections (30, 32) are bent into the same direction.

9. A wiper arm according to one of the claims 6 to 8, characterized in that the sections (30, 31, 32) are connected with each other on both sides of the retainer (20).

10. A wiper arm according to a preceding claim, characterized in that a bent section (30, 32, 40) of the fixing part (10) serving to form the retainer (20) tangentially changes into a plane section (33) of the fixing part (10).

11. A wiper arm according to a preceding claim, characterized in that the fixing part (10) changes into a section (31, 40) serving to form the retainer (20) and bent into a certain direction in a direction being bent into the opposite direction of the section.

12. A wiper arm according to a preceding claim, characterized in that the fixing part (10), seen from a bore (23) for placing upon the wiper shaft (11), comprises an opening (24) in front of the retainer (20) in the sheet metal for hanging up a pressure spring (16).

13. A wiper arm according to claim 12, characterized in that the support point of the pressure spring (16) in the opening (24) is situated at the bottom side (41) of the sheet metal turned towards the windshield (26) which is to be cleaned.

14. A wiper arm according to claim 13, characterized in that the sheet metal is inclined in the area of the opening (24) towards the windshield (26) which is to be cleaned.

15. A wiper arm according to one of the claims 12 to 14, characterized in that each edge (43) of the opening (24), at which the pressure spring (16) supports itself, is rounded.

16. A wiper arm according to a preceding claim, characterized in that in the area of the retainer (20) a stop (35) is formed for the swivelling movement of the joint piece (12).

17. A wiper arm according to claim 16, characterized in that the stop (35) is cut out of a section (31, 40) of the sheet metal of the fixing part (10) bent for forming the retainer (20).

18. A wiper arm according to claim 16, characterized in that the stop (35) is formed by a straight, lengthened end of a section (30, 32, 40) of the sheet metal of the fixing part (10) bent for forming the retainer (20).

## Revendications

1. Bras d'essuie-glace, notamment destiné à nettoyer des vitres de véhicules automobiles, comportant un élément de fixation (10) préférentiellement fabriqué entièrement en tôle, qui peut être monté de façon solidaire en rotation sur un arbre d'essuie-glace (11), et comportant un logement (20) destiné à supporter un élément d'articulation (12),
caractérisé en ce que le logement (20) est formé par pliage de la tôle parallèlement à l'axe du logement (20).

2. Bras d'essuie-glace selon la revendication 1, caractérisé en ce qu'une douille de palier (21) est emmanchée serrée dans le logement (20).

3. Bras d'essuie-glace selon la revendication 1 ou 2, caractérisé en ce que la tôle est enroulée à la manière d'une charnière plate pour former le logement (20).

4. Bras d'essuie-glace selon la revendication 3, caractérisé en ce que la tôle est enroulée de manière telle que l'extrémité libre de la section enroulée (40) se situe du côté de la face supérieure (42) de l'élément de fixation (10), qui est tournée vers l'opposé de la vitre à nettoyer (26).

5. Bras d'essuie-glace selon la revendication 3, caractérisé en ce que la tôle est enroulée de manière telle que l'extrémité libre de la section enroulée (40) se situe du côté de la face inférieure (41) de l'élément de fixation (10), qui est orientée face à la vitre à nettoyer (10).

6. Bras d'essuie-glace selon l'une quelconque des revendications précédentes, caractérisé en ce que l'élément de fixation (10) comporte plusieurs sections (30, 31, 32), se succédant les unes les autres dans le sens de l'axe du logement, l'une au moins des sections (31) étant cintrée dans un sens, et une autre au moins (30, 32) étant cintrée dans le sens opposé.

7. Bras d'essuie-glace selon la revendication 6, caractérisé en ce que des sections contiguës successives (30, 31, 32) sont respectivement cintrées dans des sens opposés.

8. Bras d'essuie-glace selon la revendication 6 ou 7, caractérisé en ce qu'au moins trois sections (30, 31, 32) sont prévues, et en ce que les deux sections extérieures (30, 32) sont respectivement cintrées dans le même sens.

9. Bras d'essuie-glace selon l'une des revendications 6 à 8, caractérisé en ce que les sections (30, 31, 32) sont rattachées les unes aux autres des deux côtés du logement (20).

10. Bras d'essuie-glace selon l'une quelconque des revendications précédentes, caractérisé en ce qu'une section cintrée (30, 32, 40) de l'élément de fixation (10), servant à constituer le logement (20), rejoint tangentiellement une section plane (33) de l'élément de fixation (10).

11. Bras d'essuie-glace selon l'une quelconque des revendications précédentes, caractérisé en ce que l'élément de fixation (10) rejoint une section (31, 40) cintrée dans un sens donné, servant à constituer le logement (20), en suivant une cambrure qui est opposée à la cambrure de cette section.

12. Bras d'essuie-glace selon l'une quelconque des revendications précédentes, caractérisé en ce que l'élément de fixation (10) comporte une lumière (24) permettant l'accrochage d'un ressort de pression d'application (16), cette lumière étant située devant le logement (20), vue depuis un trou (23) permettant l'emmanchement de l'élément sur l'arbre d'essuie-glace (11).

13. Bras d'essuie-glace selon la revendication 12, caractérisé en ce que le point d'appui du ressort de pression d'application (16), dans la lumière (24), se situe au niveau de la face inférieure (41) de la tôle, qui est orientée face à la vitre à nettoyer (26).

14. Bras d'essuie-glace selon la revendication 13, caractérisé en ce que la tôle est inclinée en direction de la vitre à nettoyer (26), au niveau de la lumière (24).

15. Bras d'essuie-glace selon l'une des revendications 12 à 14, caractérisé en ce que chaque bord (43) de la lumière (24), sur lequel s'appuie le ressort de pression d'application (16), est arrondi.

16. Bras d'essuie-glace selon l'une quelconque des revendications précédentes, caractérisé en ce qu'une butée (35) est conformée au niveau du logement (20), destinée à limiter le mouvement d'oscillation de l'élément d'articulation (12).

17. Bras d'essuie-glace selon la revendication 16, caractérisé en ce que la butée (35) est découpée dans une section cintrée (31, 40) de la tôle de l'élément de fixation (10), qui est destinée à former le logement (20).

18. Bras d'essuie-glace selon la revendication 16, caractérisé en ce que la butée (35) est constituée par une extrémité prolongée droite d'une section cintrée (30, 32, 40) de la tôle de l'élément de fixation (10), qui est destinée à former le logement (20).
